(19) **Europäisches Patentamt**

**European Patent Office**

**Office européen des brevets**

(11) **EP 1 453 694 B1**

(12) **FASCICULE DE BREVET EUROPEEN**

(45) Date de publication et mention
de la délivrance du brevet:
**01.03.2006 Bulletin 2006/09**

(51) Int Cl.:
***B60K 6/04*** (2006.01)

(21) Numéro de dépôt: **02803455.1**

(22) Date de dépôt: **21.11.2002**

(86) Numéro de dépôt international:
**PCT/FR2002/003991**

(87) Numéro de publication internationale:
**WO 2003/043846 (30.05.2003 Gazette 2003/22)**

(54) **DISPOSITIF DE TRANSMISSION DE PUISSANCE A AU MOINS DEUX TRAINS EPICYCLO DAUX**

KRAFTÜBERTRAGUNGSVORRICHTUNG MIT MINDESTENS ZWEI PLANETENGETRIEBEZÜGEN

POWER TRANSMISSION DEVICE WITH AT LEAST TWO PLANETARY GEAR TRAINS

(84) Etats contractants désignés:
**DE ES FR GB IT**

(30) Priorité: **21.11.2001 FR 0115050**

(43) Date de publication de la demande:
**08.09.2004 Bulletin 2004/37**

(73) Titulaire: **Peugeot Citroen Automobiles SA**
**92200 Neuilly sur Seine (FR)**

(72) Inventeurs:
• **BEZIAN, Alain**
**F-92500 Rueil Malmaison (FR)**
• **LAEUFFER, Jacques**
**F-75116 Paris (FR)**

(74) Mandataire: **Texier, Christian**
**Cabinet Régimbeau**
**20, rue de Chazelles**
**75847 Paris cedex 17 (FR)**

(56) Documents cités:
**EP-A- 1 092 583 DE-A- 19 903 936**

**EP 1 453 694 B1**

## Description

L'invention concerne un dispositif de transmission pour un véhicule automobile, destiné à assurer la transmission de puissance entre le moteur thermique et les roues du véhicule, en supprimant les ruptures de couple.

On connaît déjà des organes de transmission de ce type, par exemple les boites de vitesses automatiques ou encore les organes du type CVT (Continuous Variable Transmission) ou encore du type IVT (Infinitely Variable Transmission), c'est à dire un organe de transmission permettant de réaliser tous les rapports de transmission contenus dans un intervalle déterminé.

Ces organes de transmission permettent de placer le moteur thermique à son meilleur point de fonctionnement en adaptant le rapport de transmission aux conditions de roulage.

Cependant, ces organes ont tous pour inconvénient d'entraîner une consommation élevée car ils présentent une ouverture de boîte de vitesses qui est limitée. Par ailleurs, l'absence de rupture de couple est obtenue en dissipant à perte de l'énergie dans les embrayages, coupleurs ou machines hydrauliques.

Un organe de transmission a déjà été mis au point pour surmonter cet inconvénient, ainsi que pour améliorer le confort longitudinal, par rapport à une boîte de vitesse automatique ou un organe de transmission CVT, dans sa phase de démarrage.

Cet organe de transmission, utilisé par TOYOTA sur le véhicule PRIUS, comporte deux machines électriques, un train épicycloïdal par l'intermédiaire duquel le moteur thermique et les deux machines électriques sont reliés entre eux, ainsi qu'une batterie. Cet organe de transmission fonctionne selon le principe de la dérivation de puissance qui permet de moduler la puissance transmise aux roues.

Lorsque le moteur thermique fonctionne, une partie de sa puissance est transmise directement et de façon mécanique aux roues du véhicule, tandis qu'une autre partie de sa puissance est "dérivée" par l'intermédiaire des deux machines électriques.

La puissance dérivée vers les machines électriques peut être transmise à la batterie ou encore vers les roues du véhicule.

Cet organe de transmission permet également de faire fonctionner une des machines électriques en générateur, dans une phase de ralentissement, afin de transmettre de la puissance vers la batterie.

Un tel organe de transmission permet d'obtenir tous les rapports de transmission dans un intervalle donné, tout en réduisant la consommation d'environ 40% par rapport à une boîte de vitesse automatique classique, notamment grâce à l'absence de tout embrayage dissipant de l'énergie.

Cet organe présente cependant l'inconvénient d'être d'un coût élevé, notamment du fait de la présence de la batterie. Par ailleurs, la voie électrique présente un mauvais rendement.

Le document EP-1 092 583 décrit un groupe motopropulseur pour un véhicule qui comprend un moteur thermique, un superviseur, un coupleur électromagnétique regroupant deux machines électriques ainsi qu'un, voire deux trains épicycloïdaux.

Ce coupleur est conçu de manière spécifique, le rotor d'une machine étant porté par le stator de l'autre machine, les deux machines étant par ailleurs concentriques.

Ce groupe motopropulseur apporte une solution au problème du dimensionnement des machines électriques et à celui des pertes électriques à vitesse nulle du coupleur.

Il présente cependant des inconvénients.

En effet, il nécessite tout d'abord la conception d'un coupleur électromagnétique spécifique constitué de deux machines électriques imbriquées et dont le coût est nécessairement élevé.

Par ailleurs, la liaison entre les deux machines électriques est établie de façon mécanique et permanente, et non par l'intermédiaire de trains épicycloïdaux. Cette disposition limite nécessairement les modes de fonctionnement disponibles et donc notamment la possibilité d'optimiser la consommation.

De même, la liaison permanente entre le moteur thermique et le coupleur limite le fonctionnement de l'ensemble.

Enfin, le dispositif de commutation comprend des éléments dissipatifs tels qu'un frein à bande ou un embrayage qui entraînent nécessairement des pertes et ne permet pas d'assurer la continuité du couple fourni aux roues.

Le document DE-199 03 936 concerne un dispositif de transmission pour un véhicule automobile équipé d'un moteur thermique, ce dispositif de transmission comprenant deux machines électriques, chacune étant accouplée à au moins un train épicycloïdal.

Un dispositif de commutation mécanique est également prévu.

Ce dispositif est conçu de telle sorte que les machines électriques ne sont accouplées, ni au vilebrequin du moteur thermique, ni aux roues. Ces liaisons ne peuvent s'effectuer que par l'intermédiaire d'un train épicycloïdal.

Ce dispositif de transmission présente de nombreux inconvénients.

En effet, la présence d'un train épicycloïdal intermédiaire entre une machine électrique et les roues nécessite, lors du démarrage du véhicule, un couple important sur une sortie du train qui doit être fourni par le moteur thermique ou par un frein. Ceci n'est pas souhaitable, notamment en termes de consommation.

Par ailleurs, le fonctionnement de ce dispositif de transmission nécessite la présence de freins en entrée et sortie.

L'invention a pour objet d'améliorer les dispositifs de transmission connus pour des véhicules hybrides en réduisant encore la consommation, l'encombrement total et les coûts, ceci notamment en utilisant des machines électriques standards et en rendant inutile la présence de batteries de puissance.

L'invention concerne donc un dispositif de transmission de puissance entre le moteur thermique et les roues d'un véhicule automobile, le dispositif comprenant deux machines électriques indépendantes, au moins deux trains épicycloïdaux reliant le moteur thermique et les machines électriques entre eux et aux roues du véhicule, un dispositif de commutation mécanique assurant le passage d'un mode de fonctionnement du dispositif de transmission à un autre, chaque mode de fonctionnement correspondant à une plage différente de rapports de transmission, le dispositif de commutation permettant de relier l'une des machines électriques directement aux roues du véhicule et un dispositif de contrôle pilotant le moteur thermique, les deux machines électriques et le dispositif de commutation mécanique, de façon à ce que les points de fonctionnement du moteur thermique et des machines électriques correspondent à la consommation instantanée minimale et permettent d'obtenir la puissance demandée aux roues.

Ce dispositif de transmission permet de réduire la consommation grâce à la présence de plus d'un train épicycloïdal, ce qui permet de réduire la puissance électrique dérivée.

De préférence, le dispositif de commutation mécanique ne comporte pas d'élément dissipatif et permet de limiter ou supprimer les à-coups lors du passage d'un mode de fonctionnement à un autre.

Ainsi, le dispositif de transmission permet alors d'encore plus réduire la consommation.

Selon l'invention, le dispositif de commutation mécanique est placé entre l'une des deux machines électriques et le reste du dispositif de transmission.

De préférence, le dispositif de commutation mécanique permet le choix entre deux modes de fonctionnement différents.

Dans une forme de réalisation préférée de l'invention, le dispositif de transmission comprend deux trains épicycloïdaux dont les trois arbres sont libres en rotation par rapport à la caisse du véhicule et au carter du moteur.

Dans une première variante, les deux porte-satellites des trains sont reliés entre eux et aux roues.

L'une des machines électriques peut alors être reliée, par l'intermédiaire du dispositif de commutation mécanique, soit aux roues du véhicule, soit au planétaire d'un des deux trains épicycloïdaux.

Dans une deuxième variante, le porte-satellites du premier train épicycloïdal est relié à la couronne du deuxième train épicycloïdal et aux roues.

L'une des machines électriques peut alors être reliée, par l'intermédiaire du dispositif de commutation, soit à la couronne, soit au planétaire du deuxième train épicycloïdal.

Dans une troisième variante, la couronne du premier train épicycloïdal est reliée au porte-satellites du deuxième train épicycloïdal et aux roues.

L'une des machines électriques peut alors être reliée, par l'intermédiaire du dispositif de commutation, soit au planétaire du premier train épicycloïdal, soit au porte-satellites du deuxième train épicycloïdal.

Dans une quatrième variante, le planétaire du premier train est relié à la couronne du deuxième train et aux roues.

L'une des machines électriques peut alors être reliée, par l'intermédiaire du dispositif de commutation, soit au planétaire, soit au porte-satellites du premier train épicycloïdal.

Par ailleurs, les raisons des deux trains épicycloïdaux sont choisies de telle sorte que, lorsque la vitesse de l'arbre de sortie de ladite machine électrique est égale à la vitesse du planétaire dudit train épicycloïdal, la vitesse de l'arbre de sortie de l'autre machine électrique est nulle.

De préférence, le dispositif de commutation mécanique sans élément dissipatif est un crabot.

L'invention concerne également un procédé de transmission de puissance entre le moteur thermique et les roues d'un véhicule automobile, au moyen de deux machines électriques indépendantes, d'au moins deux trains épicycloïdaux reliant le moteur thermique et les machines électriques entre eux, et d'un dispositif de commutation mécanique permettant de relier l'une des machines électriques aux roues du véhicule, ce procédé consistant à déterminer le rapport de transmission, à commander le dispositif de commutation pour assurer la transmission selon le mode correspondant audit rapport et à piloter le moteur thermique et les deux machines électriques, de façon à ce que les points de fonctionnement du moteur thermique et des machines électriques correspondent à la consommation instantanée minimale et permettent d'obtenir la puissance demandée aux roues.

De préférence, le dispositif de commutation mécanique ne comporte pas d'élément dissipatif.

Selon l'invention, le passage d'un mode de fonctionnement à l'autre est effectué lorsque la vitesse de l'arbre de sortie de la machine électrique reliée au dispositif de commutation mécanique est égale à la vitesse de l'arbre reliant ce dispositif de commutation au reste du dispositif de transmission.

De préférence, le passage d'un mode de fonctionnement à l'autre est effectué lorsque la puissance dérivée sur les deux machines électriques est nulle, de façon à éviter une variation brutale du couple.

L'invention concerne également un véhicule automobile équipé d'un dispositif de transmission de puissance tel que décrit précédemment.

Ce véhicule automobile peut comprendre une batterie de puissance.

L'invention sera mieux comprise et d'autres buts, avantages et caractéristiques de celle-ci apparaîtront plus clairement à la lecture de la description qui suit et qui est faite au regard des dessins annexés sur lesquels:

- La figure 1 est une vue schématique représentant un premier exemple de réalisation d'un dispositif de transmission selon l'invention comportant deux trains épicycloïdaux,
- La figure 2 est un schéma illustrant le fonctionnement du dispositif de transmission de la figure 1, dans un premier mode
- La figure 3 est un schéma illustrant le fonctionnement du dispositif de la figure 1, dans un deuxième mode
- La figure 4 est une vue schématique représentant un deuxième exemple de réalisation d'un dispositif de transmission selon l'invention,
- La figure 5 est une vue schématique représentant un troisième exemple de réalisation d'un dispositif de transmission selon l'invention,
- La figure 6 est une vue schématique représentant un quatrième exemple de réalisation d'un dispositif de transmission selon l'invention et
- Les figures 7 à 10 qui donnent, pour le premier exemple de réalisation d'un dispositif de transmission selon l'invention et lors d'une accélération du véhicule automobile, l'évolution en fonction du temps, respectivement du couple de chaque machine électrique, $(C_3, C_4)$, du régime de chaque machine $(N_3, N_4)$, de la puissance électrique dérivée $(P)$ et de la vitesse du véhicule.

Les éléments communs aux différentes figures seront désignés par les mêmes références.

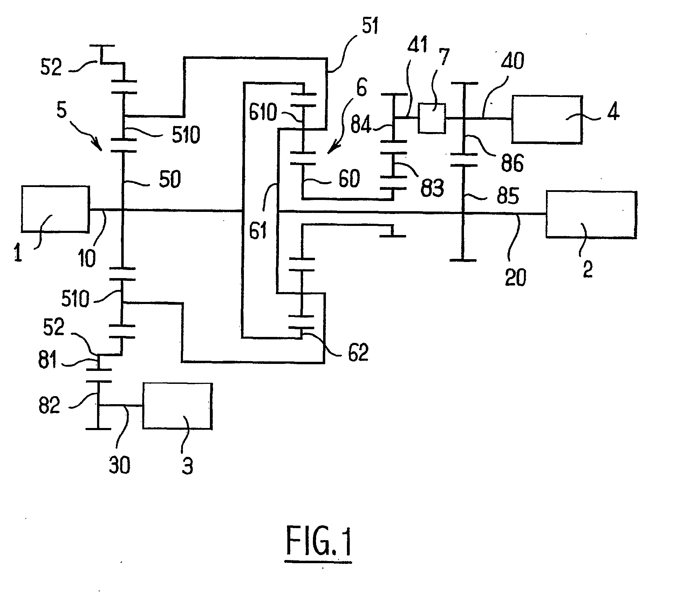

Le dispositif de transmission illustré à la figure 1 est destiné à un véhicule automobile comportant un moteur thermique 1. Les roues du véhicule sont référencées 2.

Le dispositif de transmission comprend deux machines électriques 3 et 4.

Le moteur thermique 1 et les machines électriques 3 et 4 sort reliés entre eux par l'intermédiaire de deux trains épicycloïdaux 5 et 6.

Le train épicycloïdal 5 est relié par l'intermédiaire de son planétaire 50 à l'arbre de sortie 10 du moteur thermique 1.

Son porte-satellites 51 est relié à l'arbre de sortie 20 relié aux roues 2. Les satellites portent quant à eux la référence 510.

Enfin, la machine électrique 3 engrène sur la couronne 52 du premier train 5 par l'intermédiaire des roues dentées 81 et 82. La machine 3 est reliée à la roue dentée 81 par son arbre de sortie 30.

L'arbre de sortie 10 du moteur thermique 1 est également relié à la couronne 62 du deuxième train 6.

Le porte-satellites 61 est relié au porte-satellites 51 et à l'arbre de sortie 20. Les satellites portent la référence 610.

Enfin, le planétaire 60 du deuxième train 6 peut être relié à la machine électrique 4, au moyen d'un dispositif de commutation mécanique 7 représenté très schématiquement sur la figure 1, et par l'intermédiaire des arbres 40 et 41 et des roues dentées 83 et 84.

De préférence, ce dispositif de commutation mécanique ne comporte pas d'éléments dissipatifs. Il peut notamment se présenter sous la forme d'un crabot.

Enfin, la machine électrique 4 peut également être reliée, toujours par l'intermédiaire du dispositif de commutation mécanique 7, à l'arbre de sortie 20, par l'intermédiaire des roues dentées 85 et 86.

Ainsi, dans ce dispositif de transmission, le dispositif de commutation mécanique 7 est placé entre une des deux machines électriques 4 et le reste du dispositif de transmission. En pratique, ce dispositif de transmission se présente sous la forme d'un seul crabot.

Par ailleurs, les deux trains épicycloïdaux 5 et 6 sont agencés de telle sorte que les deux porte-satellites 51 et 61 sont reliés entre eux et aux roues.

Ainsi, la liaison entre le moteur thermique et les machines électriques et entre les machines électriques est réalisée par l'intermédiaire des deux trains épicycloïdaux.

En particulier, il n'existe pas de liaison fixe entre le moteur thermique et l'une ou l'autre des machines électriques, afin de disposer d'une grande souplesse dans le choix des modes de fonctionnement.

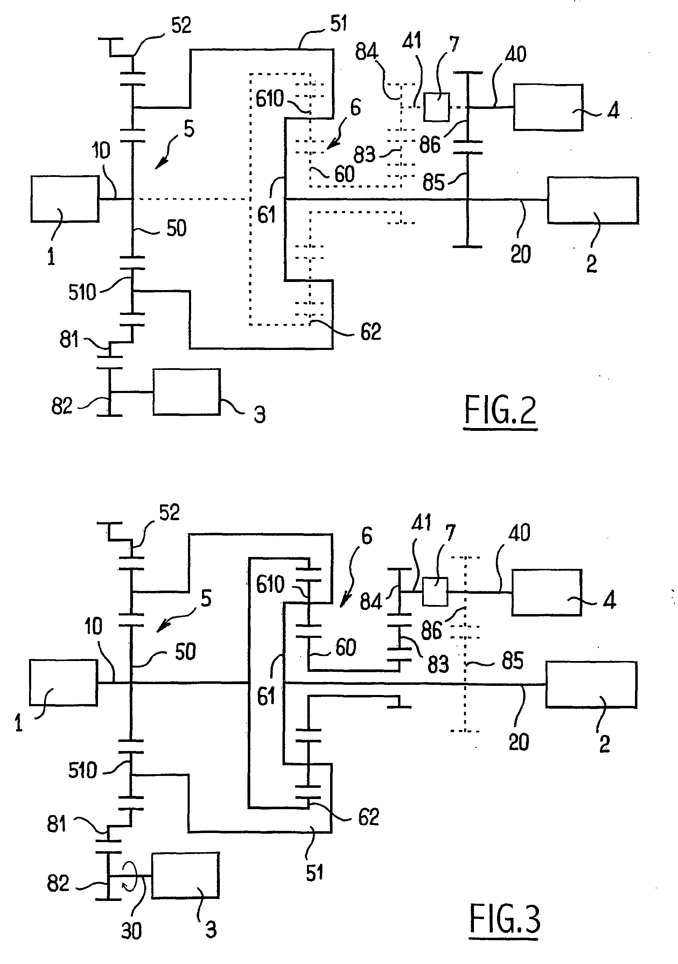

Le fonctionnement du dispositif de transmission va maintenant être décrit tout d'abord en référence à la figure 2 qui illustre un premier mode de fonctionnement.

Ce premier mode de fonctionnement est utilisé pour des rapports de transmission relativement faibles. Ils peuvent notamment correspondre à une vitesse comprise entre 0 et 15 kilomètres / heure (arbre de sortie 20 relié aux roues) pour une vitesse du moteur thermique 1 de 1000 tours / minute.

Ce premier mode de fonctionnement est donc notamment utilisé lors du démarrage du véhicule.

Dans ce mode de fonctionnement, la machine électrique 4 est reliée, par l'intermédiaire des roues dentées 85 et 86, à l'arbre de sortie 20, constituant l'arbre secondaire de la transmission. Le dispositif de commutation 7 est actionné de façon appropriée pour que la roue dentée 86 soit en prise sur l'arbre 40.

La machine électrique 4 est ainsi en prise directe avec l'arbre de sortie 20 et donc les roues du véhicule. Cette liaison directe s'effectue sans pertes. Par ailleurs, elle permet à un machine électrique de générer un couple important au niveau des roues avec une machine de dimensions relativement faibles.

Le deuxième train épicycloïdal 6 est représenté en pointillés sur la figure 2. En effet, la couronne 62 de ce train 6 est bien entraînée par le moteur thermique 1, mais ne transmet pas de puissance aux roues puisqu'elle n'est pas reliée à l'arbre de sortie 20.

Ainsi, la roue dentée 86 entraîne l'arbre de sortie 20 relié aux roues 4, par l'intermédiaire de la roue dentée 85, tandis que la roue dentée 84 est folle.

Dans ce mode de fonctionnement, la vitesse de l'arbre de sortie 20 est égale à la vitesse des porte-satellites 51 et 61 des deux trains épicycloïdaux.

Lorsque le véhicule est en traction, c'est-à-dire que le moteur thermique fournit de la puissance aux roues, la machine électrique 3 fonctionne en alternateur tandis que la machine électrique 4 est moteur. Lorsque le véhicule est en récupération, c'est-à-dire que les roues entraînent le moteur thermique en rotation, la machine électrique 3 fonctionne en moteur et la machine électrique 4 en alternateur.

Un dispositif de liaison, non illustré sur les figures, assure le passage de puissance entre les deux machines électriques.

Un tel dispositif de liaison est notamment décrit dans le document FR-00 09461.

On peut également noter que le dispositif de transmission est utilisé selon le premier mode de fonctionnement, lorsque le véhicule est en marche arrière.

On se réfère maintenant à la figure 3 qui illustre un deuxième mode de fonctionnement du dispositif de transmission illustré à la figure 1.

Ce deuxième mode de fonctionnement est utilisé pour des rapports de transmission relativement longs, correspondant par exemple à une vitesse de l'arbre de sortie comprise entre 15 et 60 kilomètres / heure pour une vitesse du moteur thermique de 1000 tours / minute.

Ce deuxième mode de fonctionnement est utilisé lorsque le véhicule est en marche avant, après démarrage.

Dans ce deuxième mode de fonctionnement, le système de commutation mécanique 7 est commandé de façon à relier la machine électrique 4 à la roue dentée 84, alors en prise avec l'arbre 41, la roue 86 étant alors folle. Les arbres 40 et 41 sont alors liés en rotation par l'intermédiaire du dispositif 7.

Les roues 85 et 86 sont représentées en pointillés sur la figure 3 pour illustrer le fait qu'elles ne transmettent pas de puissance aux roues.

La machine électrique 4 engrène alors sur le planétaire 60 du deuxième train épicycloïdal 6, par l'intermédiaire des roues 84 et 83.

Par ailleurs, le moteur thermique 1 est toujours connecté au planétaire 50 du premier train épicycloïdal 5 et la machine électrique 3 engrène toujours sur la couronne 52 de ce premier train, par l'intermédiaire des roues 81 et 82.

Comme expliqué précédemment pour le premier mode de fonctionnement, les machines électriques 3 et 4 peuvent fonctionner en moteur ou alternateur, selon les cas.

Un dispositif de contrôle, non illustré sur les figures, pilote le moteur thermique et les deux machines électriques en déterminant leur point de fonctionnement et pilote également le dispositif de commutation mécanique 7 de la façon suivante.

A partir des cartographies de consommation instantanée du moteur thermique ainsi que des cartographies de rendement des machines électriques, le dispositif de contrôle détermine le point de fonctionnement du moteur thermique et des machines électriques qui correspond à la consommation instantanée minimale et qui assure que le couple obtenu aux roues correspond bien à ce que souhaite le conducteur.

Si le dispositif de contrôle détecte un minimum de consommation pour un rapport de transmission relativement faible, le dispositif de transmission de puissance est utilisé selon le premier mode de fonctionnement et, dans ce cas, le dispositif de commutation mécanique 7 est commandé de façon à ce que la roue 86 soit solidaire de l'arbre de sortie 40 de la machine électrique 4. Sinon, le dispositif de transmission est utilisé dans le deuxième mode de fonctionnement et le dispositif de commutation mécanique 7 est alors commandé de façon à ce que l'arbre de sortie 40 de la machine électrique 4 soit relié à la roue 84, alors solidaire de l'arbre 41.

En pratique, le passage d'un mode de fonctionnement à un autre est réalisé lorsque la vitesse de l'arbre de sortie 40 de la machine électrique 4 est égale à la vitesse de l'arbre 41 reliant le dispositif de commutation 7 à la roue dentée 84. La continuité des régimes est nécessaire pour que le dispositif de commutation puisse fonctionner.

Au rapport de démultiplication près, dû à la présence des roues dentées 83 et 84, cette condition est également réalisée lorsque la vitesse de l'arbre de sortie 40 de la machine électrique 4 est égale à la vitesse du planétaire 60 du train épicycloïdal 6.

Lors du passage d'un mode de fonctionnement à un autre, le couple sur l'arbre de sortie 20 diminue, ce qui génère un à-coup brutal.

Plusieurs solutions peuvent être envisagées pour limiter ou supprimer cet à-coup lors du changement de mode de fonctionnement.

On peut notamment prévoir que le dispositif de contrôle commande de façon appropriée la machine électrique 3, lors d'un changement de mode de fonctionnement, pour que cette machine fournisse un couple plus important pendant une durée déterminée, pour compenser l'absence de couple en provenance de la machine électrique 4.

Une autre solution consiste à choisir les raisons des trains épicycloïdaux 5 et 6 de telle sorte que lorsque la condition de continuité des régimes est remplie, la vitesse de l'arbre de sortie 30 de la machine électrique 3 est nulle.

Cette condition se traduit également par le fait que la puissance dérivée sur les deux machines électriques 3 et 4 est nulle.

L'arrêt de la machine électrique 3 lors du changement de régime permet de minimiser le couple fourni par la machine électrique 4. Ce couple n'est cependant pas nul, du fait des pertes dans les machines électriques et de la consommation sur le réseau de bord.

Cette condition étant réalisée, on peut prévoir que le dispositif de contrôle commande de façon appropriée le moteur thermique et/ou la machine électrique 3 de façon à générer un couple légèrement plus important pour assurer la continuité du couple fourni aux roues.

En appliquant la relation de WILLIS sur chacun des deux trains épicycloïdaux, l'arrêt de la machine électrique 3 lors du changement de mode de fonctionnement se traduit par la condition suivante:

$$[r_3/(r_2 R_2)-(R_2+1)/R_2+(R_1+1)]=0$$

avec:

$r_3=Z_4/Z_3$ où $Z_3$ et $Z_4$ sont respectivement le nombre de dents des roues dentées 83 et 84,
$r_2=Z_6/Z_5$ où $Z_5$ et $Z_6$ sont respectivement le nombre de dents des roues dentées 85 et 86,
$R_2$ est la raison du train épicycloïdal 6,
$R_1$ est la raison du train épicycloïdal 5.

La présence d'un train épicycloïdal supplémentaire, par rapport aux dispositifs de transmission connus avec un seul train épicycloïdal, permet de faire fonctionner le dispositif de transmission selon un mode de fonctionnement supplémentaire.

Ce mode de fonctionnement supplémentaire permet de faire fonctionner le moteur thermique et les machines électriques avec un meilleur rendement, dans une plage de rapports de transmission plus importante.

Ceci se traduit par le fait que la puissance électrique dérivée par l'intermédiaire des deux machines électriques diminue.

A titre d'exemple, par rapport à un organe de transmission classique, pour lequel la puissance dérivée maximale est de l'ordre de 50 kW, cette puissance dérivée est de l'ordre de 17 kW pour un dispositif de transmission tel que décrit précédemment, et ceci pour des performances équivalentes.

Ainsi, le dispositif de transmission selon l'invention permet d'assurer la continuité du couple aux roues et donc de supprimer les à-coups, tout en fournissant la puissance demandée aux roues avec une consommation minimale.

A titre d'illustration des avantages procurés par le dispositif de transmission selon l'invention, les figures 7 à 10 montrent l'évolution en fonction du temps du couple et du régime de chacune des deux machines électriques, ainsi que l'évolution en fonction du temps de la puissance dérivée et de la vitesse du véhicule, ceci, lors d'une accélération du véhicule.

Au temps t=0 jusqu'au temps t=9,5 secondes, c'est le premier mode de fonctionnement décrit en référence à la figure 2 qui est utilisé.

Le passage au deuxième mode de fonctionnement est réalisé à t=9,5 secondes, alors que le régime de la machine électrique 3 ($N_3$) est nul et que le couple fourni par la machine électrique 4 ($C_4$) est nul. A cet instant là, la puissance dérivée sur les deux machines électriques 3 et 4 (P) est également nulle.

Les figures 7 à 10 montrent que le dispositif de transmission selon l'invention assure une continuité du couple et du régime de chacune des deux machines électriques.

Il assure une forte dynamique longitudinale avec des machines électriques dont les dimensionnements sont modérés grâce aux larges possibilités d'adaptation procurées par la partie mécanique.

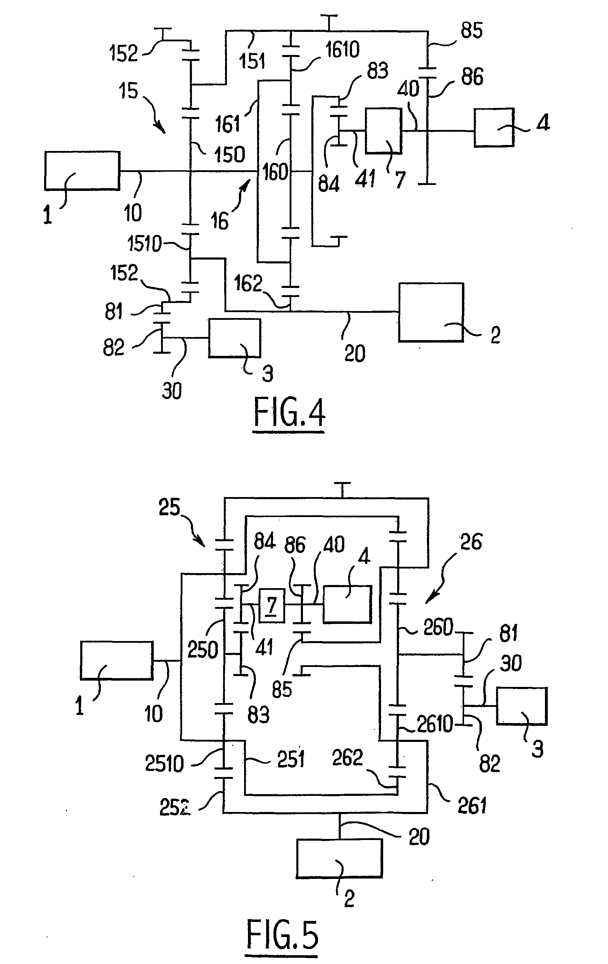

D'autres exemples de réalisation du dispositif de commutation selon l'invention sont illustrés aux figures 4 à 6.

Bien entendu, l'invention n'est pas limitée à un dispositif de transmission comportant deux trains épicycloïdaux. On pourrait également envisager un dispositif de transmission de puissance comportant trois trains épicycloïdaux, voire plus. Le nombre de trains épicycloïdaux est essentiellement limité par des raisons de coût.

Dans le deuxième exemple de réalisation illustré à la figure 4, le moteur thermique 1 et les machines électriques 3 et 4 sont reliés entre eux par l'intermédiaire de deux trains épicycloïdaux 15 et 16.

Le train épicycloïdal 15 est relié par l'intermédiaire de son planétaire 150 à l'arbre de sortie 10 du moteur thermique.

Son porte-satellites 151 est relié à la couronne 162 du deuxième train épicycloïdal 16 et à l'arbre de sortie 20 relié aux roues 2. Les satellites portent la référence 1510.

La machine électrique 3 engrène sur la couronne 152 du premier train épicycloïdal 15 par l'intermédiaire des roues dentées 81 et 82. La machine 3 est reliée à la roue dentée 82 par son arbre de sortie 30.

L'arbre de sortie 10 du moteur thermique 1 est également relié au porte-satellites 161 du deuxième train épicycloïdal 16. Les satellites portent la référence 1610.

La couronne 162 du deuxième train épicycloïdal 16 peut être également reliée à la machine électrique 4, au moyen du dispositif de commutation mécanique 7 et par l'intermédiaire de l'arbre 40 de la machine électrique 4 et des roues dentées 85 et 86.

Enfin, le planétaire 160 du deuxième train épicycloïdal peut également être relié à la machine électrique 4, au moyen du dispositif de commutation mécanique 7 et par l'intermédiaire des arbres 40 et 41 et des roues dentées 83 et 84.

Comme dans le premier exemple de réalisation, le dispositif de commutation mécanique est placé entre une des deux machines électriques et le reste du dispositif de transmission. Il se compose, par exemple, d'un seul crabot.

Dans le troisième mode de réalisation illustré à la figure 5, le moteur thermique 1 et les machines électriques 3 et 4 sont reliés entre eux par l'intermédiaire de deux trains épicycloïdaux 25 et 26.

Le premier train épicycloïdal 25 est relié par l'intermédiaire de son porte-satellites 251 à l'arbre de sortie 10 du moteur thermique 1 et à la couronne 262 du deuxième train épicycloïdal 26. Les satellites portent la référence 2510.

Son planétaire 250 peut être relié à la machine électrique 4 au moyen du dispositif de commutation mécanique 7 et par l'intermédiaire des arbres 40 et 41 et des roues dentées 83 et 84.

La couronne 252 du premier train épicycloïdal 25 est reliée au porte-satellites 261 du deuxième train épicycloïdal 26 et à l'arbre de sortie 20 relié aux roues 2. Les satellites portent la référence 2610.

Elle peut également être reliée à la machine électrique 4, au moyen du dispositif de commutation mécanique 7 et par l'intermédiaire des roues dentées 85 et 86.

Enfin, le planétaire 260 du deuxième train épicycloïdal 26 est relié à la machine électrique 3 par l'intermédiaire des roues dentées 81 et 82 et de l'arbre de sortie 30.

Là encore, le dispositif de commutation mécanique est placé entre une des deux machines électriques et le reste du dispositif de transmission et peut alors être constitué par un crabot unique.

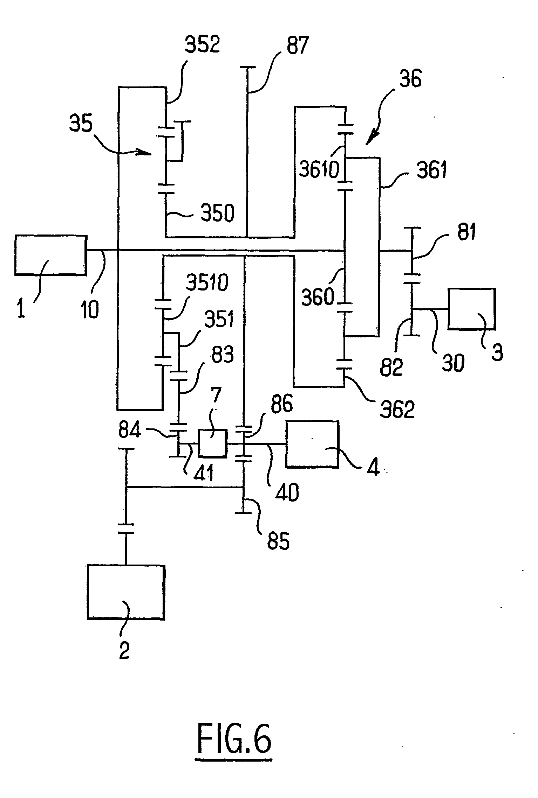

En référence maintenant à la figure 6, le moteur thermique 1 et les machines électriques 3 et 4 sont reliés entre eux par l'intermédiaire de deux trains épicycloïdaux 35 et 36.

Le premier train épicycloïdal 35 est relié par l'intermédiaire de son planétaire 350 à la couronne 362 du deuxième train épicycloïdal 36.

Par son planétaire 350, le train 35 peut également être relié à la machine électrique 4, au moyen du dispositif de commutation 7 et par l'intermédiaire des roues dentées 85 et 86.

Dans ce cas, la machine électrique 4 entraîne directement les roues 2.

La couronne 352 du train 35 est reliée à l'arbre de sortie 10 du moteur thermique 1, lequel est également relié au planétaire 360 du deuxième train épicycloïdal 36.

Par ailleurs, le porte-satellites 351 du train 35 peut être relié à la machine électrique 4, au moyen du dispositif de commutation mécanique 7 et par l'intermédiaire des roues dentées 83 et 84 et des arbres 40 et 41. Les satellites portent la référence 3510.

Dans ce cas, la machine électrique 4 sert de moteur variateur au premier train 35 et la puissance est transmise aux roues par les roues dentées 85, 86 et 87.

Le porte-satellites 361 du deuxième train épicycloïdal 36 est relié à la machine électrique 3 par l'intermédiaire des roues dentées 81 et 82 et de l'arbre 30. Les satellites portent la référence 3610.

Le dispositif de commutation 7 est, là encore, placé entre une des deux machines électriques et le reste du dispositif de transmission. En pratique, il peut se présenter sous la forme d'un crabot.

Dans tous les modes de réalisation décrits, les trains épicycloïdaux permettent de relier entre eux les machines électriques ainsi que le moteur thermique.

Il n'existe pas de liaisons fixes qui pourraient limiter le choix des modes de fonctionnement.

Dans tous les cas, les trois arbres des trains épicycloïdaux sont libres en rotation par rapport à la caisse du véhicule et au carter du moteur. Ceci présente l'avantage de fournir un grand nombre de combinaisons possibles pour optimiser le dimensionnement ces machines électriques.

Par ailleurs, les machines électriques utilisées sont indépendantes et peuvent être des machines standards, de construction simple et dont les coûts de fabrication sont optimisés, comme celles destinées à des pompes ou des compresseurs de climatisation.

A chaque train épicycloïdal peut être associé un mode de fonctionnement particulier du dispositif de transmission de puissance.

Comme décrit précédemment, le dispositif de transmission comprend d'autres éléments mécaniques que les trains épicycloïdaux, comme par exemple des roues dentées qui assurent seulement la transmission de mouvements. Cependant, il ne nécessite pas d'éléments tels que des freins pour assurer le fonctionnement du dispositif dans tous les modes.

Par ailleurs, le fait d'utiliser un dispositif de commutation mécanique, sans élément dissipatif, permet également de réduire la consommation.

Dans les exemples de réalisation décrits, le dispositif de commutation est disposé entre une machine électrique et le reste du dispositif de transmission.

Ainsi, le dispositif de commutation peut notamment se présenter sous la forme d'un crabot unique. Le logiciel de commande associé au dispositif de contrôle est donc conçu pour ne piloter qu'un crabot et il est nécessairement de conception plus simple qu'un logiciel pilotant plusieurs crabots.

Par ailleurs, dans cette configuration, le dispositif de commutation offre le choix entre deux modes de fonctionnement différents.

Ce dispositif de transmission de puissance peut être utilisé avec un véhicule automobile comportant ou non une batterie.

La présence d'une batterie présente l'intérêt de réduire la consommation lorsque le véhicule fonctionne à puissance faible.

Une batterie présente cependant des inconvénients notamment en termes d'encombrement et de coût. On peut donc choisir de ne pas en prévoir.

En pratique, et indépendamment du dispositif de transmission, la présence de batteries est déterminée suivant la stratégie de conduite choisie lors de la conception du véhicule.

Dans ce cas, un dispositif de liaison assure un passage direct de puissance entre les deux machines électriques, les machines électriques étant commandées de telle sorte que la puissance générée par une machine électrique soit immédiatement consommée par l'autre.

Un tel dispositif de liaison est notamment décrit dans le document FR-00 09461.

Les signes de référence insérés après les caractéristiques techniques figurant dans les revendications ont pour seul but de faciliter la compréhension de ces dernières et ne sauraient en limiter la portée.

## Revendications

1. Dispositif de transmission de puissance entre le moteur thermique (1) et les roues (2) d'un véhicule automobile, le dispositif comprenant deux machines électriques (3, 4) indépendantes, au moins deux trains épicycloïdaux (5, 15, 25, 35; 6, 16, 26, 36) reliant le moteur thermique et les machines électriques entre eux et aux roues du véhicule, un dispositif de commutation mécanique (7) assurant le passage d'un mode de fonctionnement du dispositif de transmission à un autre, chaque mode de transmission correspondant à une plage différente de rapports de transmission, le dispositif de commutation (7) permettant de relier l'une des machines électriques (4) directement aux roues (2) du véhicule et un dispositif de contrôle pilotant le moteur thermique (1), les deux machines électriques (3, 4) et le dispositif de commutation mécanique (7), de façon à ce que les points de fonctionnement du moteur thermique et des machines électriques correspondent à la consommation instantanée minimale et permettent d'obtenir la puissance demandée aux roues.

2. Dispositif de transmission de puissance selon la revendication 1, **caractérisé en ce que** le dispositif de commutation mécanique (7) ne comporte pas d'élément dissipatif et permet de limiter ou supprimer les à-coups lors du passage d'un mode de fonctionnement à un autre.

3. Dispositif de transmission de puissance selon la revendication 1 ou 2, dans lequel le dispositif de commutation mécanique (7) est placé entre l'une des deux machines électriques (4) et le reste du dispositif de transmission.

4. Dispositif de transmission de puissance selon l'une des revendications 1 à 3, dans lequel le dispositif de commutation mécanique permet le choix entre deux modes de fonctionnement différents.

5. Dispositif de transmission de puissance selon l'une des revendications 1 à 4, comprenant deux trains épicycloïdaux (5, 6 ; 15, 16 ; 25, 26 ; 35, 36) dont les trois arbres sont libres en rotation par rapport à la caisse du véhicule et au carter du moteur.

**6.** Dispositif de transmission de puissance selon la revendication 5, dans lequel les deux porte-satellites (51, 61) sont reliés entre eux et aux roues (2).

**7.** Dispositif de transmission de puissance selon la revendication 6, dans lequel l'une des machines électriques (4) peut être reliée, par l'intermédiaire du dispositif de commutation mécanique (7), soit aux roues (2) du véhicule, soit au planétaire (60) d'un des deux trains épicycloïdaux (6).

**8.** Dispositif de transmission de puissance selon la revendication 5, dans lequel le porte-satellites (151) du premier train épicycloïdal (15) est relié à la couronne (162) du deuxième train épicycloïdal (16) et aux roues (2).

**9.** Dispositif de transmission de puissance selon la revendication 8, dans lequel l'une des machines électriques (4) peut être reliée, par l'intermédiaire du dispositif de commutation (7), soit à la couronne (162), soit au planétaire (160) du deuxième train épicycloïdal (6).

**10.** Dispositif de transmission de puissance selon la revendication 5, dans lequel la couronne (252) du premier train épicycloïdal (25) est reliée au porte-satellites (261) du deuxième train épicycloïdal (26) et aux roues (2).

**11.** Dispositif de transmission de puissance selon la revendication 10, dans lequel l'une des machines électriques (4) peut être reliée, par l'intermédiaire du dispositif de commutation (7), soit au planétaire (250) du premier train (25), soit au porte-satellites (261) du deuxième train (26).

**12.** Dispositif de transmission de puissance selon la revendication 5, dans lequel le planétaire (350) du premier train (35) est relié à la couronne (362) du deuxième train (36) et aux roues (2).

**13.** Dispositif de transmission de puissance selon la revendication 12, dans lequel l'une des machines électriques (4) peut être reliée, par l'intermédiaire du dispositif de commutation (7), soit au planétaire (350), soit au porte-satellites du premier train épicycloïdal (35).

**14.** Dispositif de transmission de puissance selon l'une des revendications 5 à 13, dans lequel les raisons des deux trains épicycloïdaux (5; 6) sont choisies de telle sorte que, lorsque la vitesse de l'arbre de sortie (40) de ladite machine électrique (4) est égale à la vitesse du planétaire (60) dudit train épicycloïdal (6), la vitesse de l'arbre de sortie (30) de l'autre machine électrique (3) est nulle.

**15.** Dispositif de transmission de puissance selon l'une des revendications 2 à 14, dans lequel le dispositif de commutation mécanique (7) est un crabot.

**16.** Procédé de transmission de puissance entre le moteur thermique (1) et les roues (2) d'un véhicule automobile, au moyen de deux machines électriques (3, 4) indépendantes, d'au moins deux trains épicycloïdaux (5, 15, 25, 35; 6, 16, 26, 36) reliant le moteur thermique et les machines électriques entre eux, et d'un dispositif de commutation mécanique (7) permettant de relier l'une des machines électrique (4) directement aux roues (2) du véhicule, ce procédé consistant à déterminer le rapport de transmission, à commander le dispositif de commutation pour assurer la transmission selon le mode correspondant audit rapport et à piloter le moteur thermique et les deux machines électriques, de façon à ce que les points de fonctionnement du moteur thermique et des machines électriques correspondent à la consommation instantanée minimale et permettent d'obtenir la puissance demandée aux roues.

**17.** Procédé selon la revendication 16, **caractérisé en ce que** le dispositif de commutation mécanique ne comporte pas d'élément dissipatif.

**18.** Procédé selon la revendication 16 ou 17, dans lequel le passage d'un mode de fonctionnement à l'autre est effectué lorsque la vitesse de l'arbre de sortie (40)' de la machine électrique (4) reliée au dispositif de commutation mécanique est égale à la vitesse de l'arbre (41) reliant par ailleurs ce dispositif de commutation mécanique au reste du dispositif de transmission.

**19.** Procédé de transmission de puissance selon la revendication 18, dans lequel le passage d'un mode de fonctionnement à l'autre est effectué lorsque la puissance dérivée sur les deux machines électriques est nulle, de façon à éviter une variation brutale du couple.

**20.** Véhicule automobile équipé d'un dispositif de transmission de puissance selon l'une des revendications 1 à 15.

21. Véhicule automobile selon la revendication 20 comprenant une batterie de puissance.

**Claims**

1. Power transmission device between the heat engine (1) and the wheels (2) of a motor vehicle, the device comprising two independent electric machines (3, 4), at least two planetary gear trains (5, 15, 25, 35; 6, 16, 26, 36) connecting the heat engine and the electric machines together and to the wheels of the vehicle, a mechanical switching device (7) providing for the shift from one mode of operation of the transmission device to another, each mode of transmission corresponding to a different range of transmission ratios, the switching device (7) making it possible to connect one of the electric machines (4) directly to the wheels (2) of the vehicle and a drive device controlling the heat engine (1), the two electric machines (3, 4) and the mechanical switching device (7), in such a way that the operating points of the heat engine and of the electric machines correspond to the minimum instantaneous consumption and make it possible to obtain the requested power at the wheels.

2. Power transmission device according to Claim 1, **characterized in that** the mechanical switching device (7) includes no dissipative element and makes it possible to limit or eliminate jerks when shifting from one mode of operation to another.

3. Power transmission device according to Claim 1 or 2, in which the mechanical switching device (7) is placed between one of the two electric machines (4) and the remainder of the transmission device.

4. Power transmission device according to one of Claims 1 to 3, in which the mechanical switching device allows the choice between two different modes of operation.

5. Power transmission device according to any one of Claims 1 to 4, comprising two planetary gear trains (5, 6; 15, 16; 25, 26; 35, 36) whose three shafts are free in rotation with respect to the body of the vehicle and to the casing of the engine.

6. Power transmission device according to Claim 5, in which the two planet gear carriers (51, 61) are connected together and to the wheels (2).

7. Power transmission device according to Claim 6, in which one of the electric machines (4) can be connected, by means of the mechanical switching device (7), either to the wheels (2) of the vehicle, or to the sun gear (60) of one of the two planetary gear trains (6).

8. Power transmission device according to Claim 5, in which the planet gear carrier (151) of the first planetary gear train (15) is connected to the ring gear (162) of the second planetary gear train (16) and to the wheels (2).

9. Power transmission device according to Claim 8, in which one of the electric machines (4) can be connected, by means of the switching device (7), either to the ring gear (162), or to the sun gear (160) of the second planetary gear train (16).

10. Power transmission device according to Claim 5, in which the ring gear (252) of the first planetary gear train (25) is connected to the planet gear carrier (261) of the second planetary gear train (26) and to the wheels (2).

11. Power transmission device according to Claim 10, in which one of the electric machines (4) can be connected, by means of the switching device (7), either to the sun gear (250) of the first train (25), or to the planet gear carrier (261) of the second train (26).

12. Power transmission device according to Claim 5, in which the sun gear (350) of the first train (35) is connected to the ring gear (362) of the second train (36) and to the wheels (2).

13. Power transmission device according to Claim 12, in which one of the electric machines (4) can be connected, by means of a switching device (7), either to the sun gear (350), or to the planet gear carrier of the first planetary gear train (35).

14. Power transmission device according to one of Claims 5 to 13, in which the ratios of the two planetary gear trains (5; 6) are chosen in such a way that, when the speed of the output shaft (40) of said electric machine (4) is equal to the speed of the sun gear (60) of said planetary gear train (6), the speed of the output shaft (30) of the other electric machine (3) is zero.

**15.** Power transmission device according to one of Claims 2 to 14, in which the mechanical switching device (7) is a dog clutch.

**16.** Process for transmitting power between the heat engine (1) and the wheels (2) of a motor vehicle, by means of two independent electric machines (3, 4), of at least two planetary gear trains (5, 15, 25, 35; 6, 16, 26, 36) connecting the heat engine and the electric machines together, and of a mechanical switching device (7) making it possible to connect one of the electric machines (4) directly to the wheels (2) of the vehicle, this process consisting in determining the transmission ratio, in commanding the switching device so as to ensure the transmission according to the mode corresponding to said ratio and in controlling the heat engine and the two electric machines, in such a way that the operating points of the heat engine and of the electric machines correspond to the minimum instantaneous consumption and make it possible to obtain the requested power at the wheels.

**17.** Process according to Claim 16, **characterized in that** the mechanical switching device includes no dissipative element.

**18.** Process according to Claim 16 or 17, in which the shift from one mode of operation to the other is performed when the speed of the output shaft (40) of the electric machine (4) connected to the mechanical switching device is equal to the speed of the shaft (41) connecting moreover this mechanical switching device to the remainder of the transmission device.

**19.** Process for transmitting power according to Claim 18, in which the shift from one mode of operation to the other is performed when the power tapped on the two electric machines is zero, so as to avoid an abrupt variation in torque.

**20.** Motor vehicle equipped with a power transmission device according to one of Claims 1 to 15.

**21.** Motor vehicle according to Claim 20 comprising a power battery.

**Patentansprüche**

**1.** Vorrichtung zur Kraftübertragung zwischen dem Verbrennungsmotor (1) und den Rädern (2) eines Kraftfahrzeugs, wobei die Vorrichtung folgendes umfaßt: zwei unabhängige Elektromaschinen (3, 4), wenigstens zwei Planetengetriebezüge (5, 15, 25, 35; 6, 16, 26, 36), die den Verbrennungsmotor und die Elektromaschinen untereinander und mit den Rädern des Fahrzeugs verbinden, eine mechanische Schaltvorrichtung (7), die den Wechsel von einem Betriebsmodus der Kraftübertragungsvorrichtung zu einem anderen bereitstellt, wobei jeder Kraftübertragungsmodus einer unterschiedlichen Spanne von Übersetzungsverhältnissen entspricht und die Schaltvorrichtung (7) es gestattet, eine der Elektromaschinen (4) direkt mit den Rädern (2) des Fahrzeugs zu verbinden, und eine Steuervorrichtung, die den Verbrennungsmotor (1), die zwei Elektromaschinen (3, 4) und die mechanische Schaltvorrichtung (7) derart steuert, daß die Arbeitspunkte des Verbrennungsmotors und der Elektromaschinen dem momentanen minimalen Verbrauch entsprechen und es gestatten, die an den Rädern benötigte Leistung zu erhalten.

**2.** Kraftübertragungsvorrichtung nach Anspruch 1, **dadurch gekennzeichnet, daß** die mechanische Schaltvorrichtung (7) kein Verlustelement enthält und es gestattet, die Stöße beim Wechsel von einem Arbeitsmodus zu einem anderen einzuschränken oder zu unterdrücken.

**3.** Kraftübertragungsvorrichtung nach Anspruch 1 oder 2, bei der die mechanische Schaltvorrichtung (7) zwischen einer der beiden Elektromaschinen (4) und dem Rest der Übertragungsvorrichtung angeordnet ist.

**4.** Kraftübertragungsvorrichtung nach einem der Ansprüche 1 bis 3, bei der die mechanische Schaltvorrichtung die Wahl zwischen zwei verschiedenen Arbeitsmodi gestattet.

**5.** Kraftübertragungsvorrichtung nach einem der Ansprüche 1 bis 4, die zwei Planetengetriebezüge (5, 6; 15, 16; 25, 26; 35, 36) umfaßt, deren drei Achsen sich gegenüber der Fahrzeugkarosserie und dem Motorgehäuse frei drehen können.

6. Kraftübertragungsvorrichtung nach Anspruch 5, bei der die zwei Planetenradträger (51, 61) untereinander und mit den Rädern (2) verbunden sind.

7. Kraftübertragungsvorrichtung nach Anspruch 6, bei der eine der Elektromaschinen (4) mittels der mechanischen Schaltvorrichtung (7) entweder mit den Rädern (2) des Fahrzeugs oder mit dem Sonnenrad (60) eines der beiden Planetengetriebezüge (6) verbunden werden kann.

8. Kraftübertragungsvorrichtung nach Anspruch 5, bei der der Planetenradträger (151) des ersten Planetengetriebezugs (15) mit dem Tellerrad (162) des zweiten Planetengetriebezugs (16) und den Rädern (2) verbunden ist.

9. Kraftübertragungsvorrichtung nach Anspruch 8, bei der eine der Elektromaschinen (4) mittels der Schaltvorrichtung (7) entweder mit dem Tellerrad (162) oder mit dem Sonnenrad (160) des zweiten Planetengetriebezugs (6) verbunden werden kann.

10. Kraftübertragungsvorrichtung nach Anspruch 5, bei der das Tellerrad (252) des ersten Planetengetriebezugs (25) mit dem Planetenradträger (261) des zweiten Planetengetriebezugs (26) und den Rädern (2) verbunden ist.

11. Kraftübertragungsvorrichtung nach Anspruch 10, bei der eine der Elektromaschinen (4) mittels der Schaltvorrichtung (7) entweder mit dem Sonnenrad (250) des ersten Zugs (25) oder dem Planetenradträger (261) des zweiten Zugs (26) verbunden werden kann.

12. Kraftübertragungsvorrichtung nach Anspruch 5, bei der das Sonnenrad (350) des ersten Zugs (35) mit dem Tellerrad (362) des zweiten Zugs (36) und den Rädern (2) verbunden ist.

13. Kraftübertragungsvorrichtung nach Anspruch 12, bei der eine der Elektromaschinen (4) mittels der Schaltvorrichtung (7) entweder mit dem Sonnenrad (350) oder dem Planetenradträger des ersten Planetengetriebezugs (35) verbunden werden kann.

14. Kraftübertragungsvorrichtung nach einem der Ansprüche 5 bis 13, bei der die Verhältnisse der beiden Planetengetriebezüge (5; 6) derart gewählt sind, daß wenn die Geschwindigkeit der Ausgangswelle (40) der Elektromaschine (4) gleich der Geschwindigkeit des Sonnenrads (60) des Planetengetriebezugs (6) ist, die Geschwindigkeit der Ausgangswelle (30) der anderen Elektromaschine (3) Null ist.

15. Kraftübertragungsvorrichtung nach einem der Ansprüche 2 bis 14, bei der die mechanische Schaltvorrichtung (7) eine Klauenkupplung ist.

16. Verfahren zur Kraftübertragung zwischen dem Verbrennungsmotor (1) und den Rädern (2) eines Kraftfahrzeugs, mittels zweier unabhängiger Elektromaschinen (3, 4), wenigstens zweier Planetengetriebezüge (5, 15, 25, 35; 6, 16, 26, 36), die den Verbrennungsmotor und die Elektromaschinen untereinander verbinden, und einer mechanischen Schaltvorrichtung (7), die es gestattet, eine der Elektromaschinen (4) direkt mit den Rädern (2) des Fahrzeugs zu verbinden, wobei dieses Verfahren darin besteht, das Übertragungsverhältnis zu bestimmen, die Schaltvorrichtung zu steuern, damit die Übertragung gemäß dem Modus entsprechend dem genannten Verhältnis sichergestellt wird, und den Verbrennungsmotor und die beiden Elektromaschinen derart zu steuern, daß die Arbeitspunkte des Verbrennungsmotors und der Elektromaschinen dem momentanen minimalen Verbrauch entsprechen und es gestatten, die an den Rädern benötigte Leistung zu erhalten.

17. Verfahren nach Anspruch 16, **dadurch gekennzeichnet, daß** mechanische Schaltvorrichtung kein Verlustelement enthält.

18. Verfahren nach Anspruch 16 oder 17, bei dem der Wechsel von einem Arbeitsmodus zu einem anderen durchgeführt wird, wenn die Geschwindigkeit der mit der mechanischen Schaltvorrichtung verbundenen Ausgangswelle (40) der Elektromaschine (4) gleich der Geschwindigkeit der Welle (41) ist, die andererseits diese mechanische Schaltvorrichtung mit dem Rest der Übertragungsvorrichtung verbindet.

19. Kraftübertragungsverfahren nach Anspruch 18, bei dem der Wechsel von einem Arbeitsmodus zu einem anderen durchgeführt wird, wenn die auf die beiden Elektromaschinen abgeleitete Leistung Null ist, derart, daß eine heftige Änderung des Drehmoments vermieden wird.

**20.** Kraftfahrzeug, das mit einer Kraftübertragungsvorrichtung nach einem der Ansprüche 1 bis 15 ausgerüstet ist.

**21.** Kraftfahrzeug nach Anspruch 20, das eine Leistungsbatterie umfaßt.

FIG.1

FIG.2

FIG.3

FIG.4

FIG.5

FIG.6